# DEMANDE DE BREVET EUROPEEN

(11) **EP 1 659 330 A2**
(43) Date de publication de la demande: **24.05.2006**
(21) Numéro de dépôt: 05292271.3
(22) Date de dépôt: 26.10.2005
(51) Int. Cl.: F16M 11/04

(54) **Poteau central de distribution, support et procédé de fabrication correspondants**

(30) Priorité: 17.11.2004 FR 0412204
(71) Demandeur: Maquet S.A., 45160 Ardon (FR)
(72) Inventeur: Musset, Hervé, 41300 Pierrefitte sur Sauldre (FR); Sevestre, Nicolas, 45000 Orléans (FR)
(74) Mandataire: Domenego, Bertrand

(57) **Abrégé**

Ce poteau central (6) de support d'un bras principal, notamment pour un éclairage, s'étend suivant un axe central (X-X), comprend une extrémité de fixation (20) et une extrémité libre (22), et est muni d'éléments tubulaires principal (24A) et secondaire (24B) formant des logements principal et secondaire pour maintenir des éléments de fixation principal (44) et secondaire (46). Ces éléments tubulaires (24A, 24B) définissent chacun une extrémité proximale (26A, 26B) tournée vers l'extrémité de fixation (20) du poteau (6) et une extrémité distale (28A, 28B).

Application aux supports de distribution d'éclairages opératoires.

## Description

La présente invention concerne poteau central de support d'un bras principal, notamment pour un éclairage, du type
- s'étendant suivant un axe central,
- comprenant une extrémité de fixation et une extrémité libre située à l'opposé de l'extrémité de fixation, et
- étant muni d'un élément tubulaire principal formant un logement principal adapté pour maintenir un élément de fixation principal d'un bras principal.

Elle s'applique notamment aux supports de distribution pour des éclairages des salles d'opération.

On connaît des supports de distribution qui sont destinés à être fixés au plafond d'une salle d'opération, et qui comprennent un poteau central auquel sont suspendus plusieurs bras de distribution.

Chaque bras de distribution est muni d'une extrémité libre à laquelle est fixé soit un éclairage, soit un autre dispositif utile pour les opérations chirurgicales, tels que les écrans de surveillance ou des modules de distribution de fluide et d'électricité.

Les poteaux et installations connus sont constitués d'un grand nombre de pièces et ont un coût de fabrication et d'assemblage importants.

La présente invention a pour but de pallier ces inconvénients et de proposer un poteau d'un support de distribution qui soit facile et économique à fabriquer.

A cet effet, l'invention a pour objet un poteau pour support de distribution tel que précité, caractérisé en ce qu'il est muni d'un élément tubulaire secondaire formant un logement secondaire adapté pour maintenir un élément de fixation secondaire d'un bras secondaire, et en ce que ces éléments tubulaires définissent chacun une extrémité proximale tournée vers l'extrémité de fixation du poteau et une extrémité distale tournée à l'opposé de l'extrémité de fixation.

Selon des modes particuliers de réalisation, le poteau selon l'invention comporte l'une ou plusieurs des caractéristiques suivantes :
- les éléments tubulaires principal et secondaire ont des longueurs axiales différentes ;
- la longueur axiale de l'élément tubulaire principal est supérieure à la longueur axiale de l'élément tubulaire secondaire ;
- les extrémités proximales des éléments tubulaires sont axialement alignées, et l'extrémité de fixation du poteau central est formée par les éléments tubulaires principal et secondaire ;
- les extrémités distales de l'élément tubulaire principal et de l'élément tubulaire secondaire sont axialement alignées ;
- les extrémités distales de l'élément tubulaire principal et de l'élément tubulaire secondaire sont axialement décalées ;
- les éléments tubulaires sont reliés par liaison de matière, notamment par soudage ;
- les éléments tubulaires sont formés par un profilé extrudé s'étendant suivant une direction d'extrusion ;
- l'extrémité de fixation comprend une section transversale dont le contour extérieur est délimité, de préférence délimité exclusivement, par des génératrices du profilé extrudé ;
- l'extrémité libre du poteau central comprend une section transversale dont le contour extérieur est délimité exclusivement par des génératrices du profilé extrudé ;
- le profilé extrudé comprend une portion d'extrémité qui est adjacente à l'extrémité libre, et qui comporte une section transversale dont le contour extérieur est situé exclusivement à l'intérieur des génératrices du contour extérieur du profilé extrudé ; et
- le profilé extrudé est un profilé en un alliage à base d'aluminium.

L'invention a en outre pour objet un support de distribution, pour éclairage, du type comprenant un poteau central et au moins un bras principal de support, caractérisé en ce que le poteau central est un poteau central tel que défini ci-dessus.

Selon des modes particuliers de réalisation, le support comprend les caractéristiques suivantes :
- un manchon de fixation, qui est une pièce distincte des éléments tubulaires est inséré dans le logement principal ; et
- le poteau central comprend un canal central de fixation d'un bras principal et au moins un canal latéral de fixation d'un bras secondaire, et dans chacun de ces canaux, est insérée une douille de support adaptée pour supporter un bras.

L'invention a en outre pour objet un procédé de fabrication d'un poteau tel que défini ci-dessus, caractérisé par les étapes successives suivantes :
- fournir une ébauche de profilé extrudé, et
- couper l'ébauche de profilé extrudé à une longueur correspondant à la longueur du profilé extrudé.

L'invention sera mieux comprise à la lecture de la description qui va suivre, donnée uniquement à titre d'exemple et faite en se référant aux dessins annexés, sur lesquels :
- la Figure 1 est une vue en perspective d'un support de distribution selon l'invention ;
- la Figure 2 est une vue de côté, partiellement en coupe, du support de la Figure 1 ; et
- la Figure 3 est une vue en perspective du support de distribution de la Figure 1 avec deux dispositifs d'éclairage et deux écrans de surveillance ; et
- les Figures 4 et 5 sont des variantes du support de distribution.

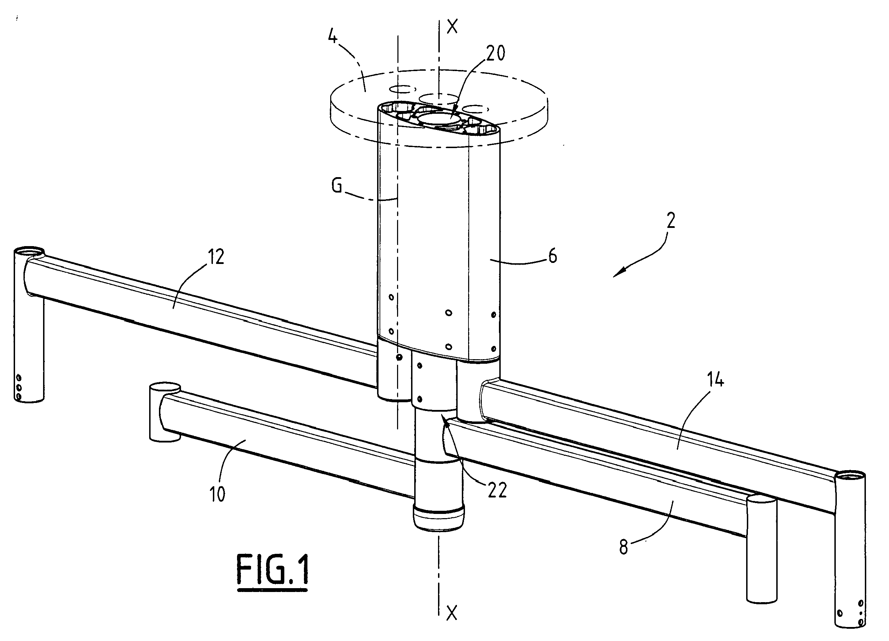

Sur la Figure 1 est représenté un support de distribution selon l'invention, désigné par la référence générale 2.

Le support 2 comprend une bride de fixation en forme de disque 4, un poteau central 6 ainsi que deux bras principaux 8, 10 et deux bras secondaires 12, 14. Le support de distribution 2 est destiné à être fixé par la bride de fixation 4 à un plafond d'une salle d'un hôpital, par exemple d'une salle d'opération.

Chacun des bras principaux 8, 10 ou secondaires 12, 14 est adapté pour porter à une extrémité respective un dispositif tel qu'un dispositif d'éclairage 16, un écran 18, ou un bloc de distribution de fluide et d'électricité 17.

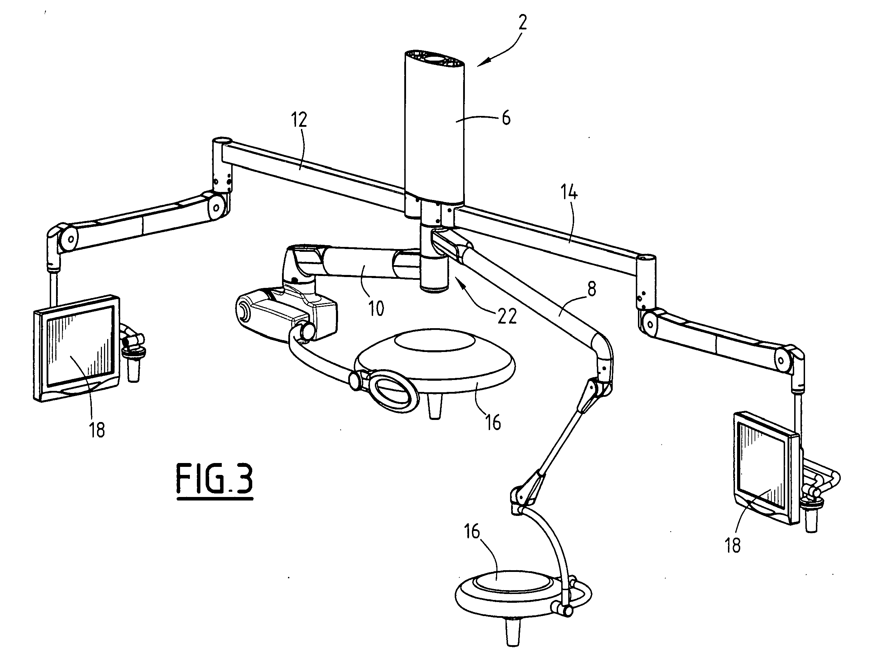

Un exemple de configuration du support 2 est représenté sur la Figure 3. Chacun des bras principaux 8, 10 porte un dispositif d'éclairage 16 et chacun des bras secondaires 12, 14 porte un écran de monitorage 18.

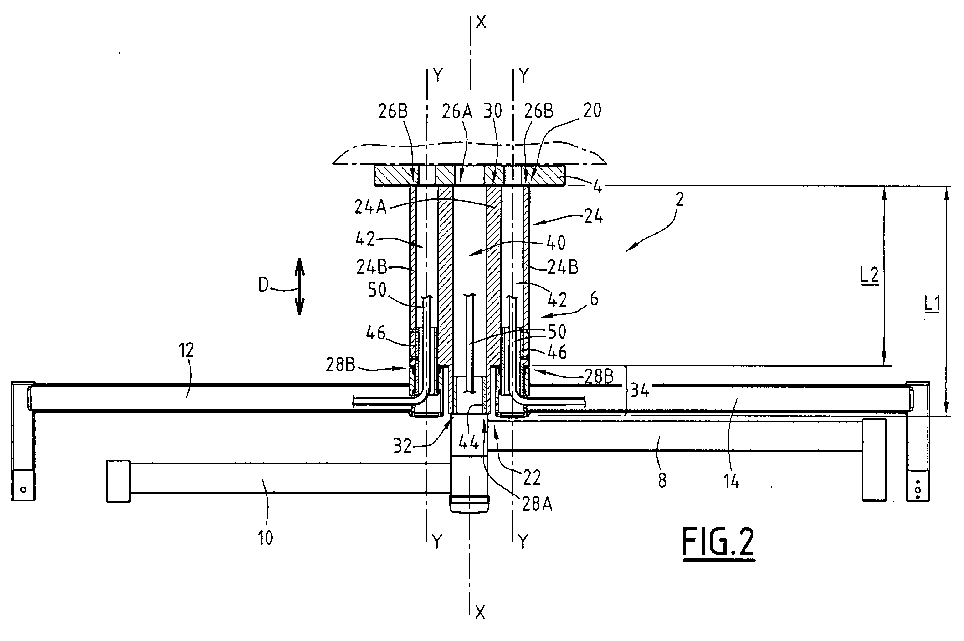

En se référant à la Figure 2, le poteau central 6 comporte une extrémité de fixation 20 qui est fixée à la bride de fixation 4 par l'intermédiaire de vis non représentées, ainsi qu'une extrémité libre 22, située à l'opposé de l'extrémité de fixation 20. A l'état monté, l'extrémité de fixation 20 constitue l'extrémité supérieure du poteau 6, tandis que l'extrémité libre 22 constitue l'extrémité inférieure.

En variante, la bride 4 est fixée par soudage au poteau 6.

Le poteau 6 s'étend suivant un axe central X-X, vertical à l'état monté.

Le poteau central 6 est constitué d'un profilé extrudé 24, qui s'étend suivant une direction d'extrusion D, parallèle à l'axe X-X.

Le profilé 24 est constitué d'un profilé partiel principal 24A qui est un profilé partiel central et de deux profilés partiels secondaires 24B qui sont des profilés partiels latéraux.

Le profilé partiel principal 24A a une longueur L1, mesurée suivant l'axe X-X, tandis que les profilés partiels secondaires 24B ont chacun une longueur axiale L2, mesurée suivant l'axe X-X.

Le profilé partiel principal 24A comporte une extrémité proximale 26A, et chacun des profilés partiels secondaires 24B comporte une extrémité proximale 26B, ces extrémités 26A, 26B étant tournées vers l'extrémité de fixation 20. Les extrémités proximales 26A, 26B sont axialement alignées et constituent l'extrémité de fixation 20.

Le profilé partiel principal 24A forme une extrémité distale 28A et chacun des profilés partiels 24B forme une extrémité distale 28B. Ces extrémités 28A, 28B sont tournées vers l'extrémité libre 22.

La longueur L1 est supérieure à la longueur L2 et les extrémités 28B sont décalées axialement de l'extrémité 28A, de telle sorte que l'extrémité 28A forme l'extrémité libre 22 du poteau 6.

Par ailleurs, le profilé extrudé 24 comporte des génératrices rectilignes G, s'étendant suivant la direction D, qui forment le contour extérieur du profilé 24. Une telle génératrice G et illustrée sur la Figure 1.

En se référant de nouveau à la Figure 2, l'extrémité de fixation 20 comporte une surface frontale 30 qui s'étend perpendiculairement à la direction d'extrusion D et qui forme une section transversale du profilé dont le contour extérieur est délimité exclusivement par des génératrices G du profilé extrudé 24. Cette extrémité de fixation 20 est très facile à fabriquer par une simple coupe perpendiculaire à l'axe X-X.

Le profilé extrudé 24 comprend une surface frontale 32, qui forme l'extrémité libre 22 et qui a une section transversale prise perpendiculairement à l'axe X-X, dont le contour extérieur s'étend exclusivement à l'intérieur des génératrices G.

Plus particulièrement, le profilé extrudé 24 comprend une portion d'extrémité 34 qui est adjacente à l'extrémité libre 22, et dont la section transversale a un contour qui est situé exclusivement à l'intérieur du contour défini par les génératrices G. Cette portion d'extrémité 34 a une surface extérieure cylindrique de section circulaire et est venue de matière du reste du profilé 24. Ainsi, la portion d'extrémité 34 forme un manchon de fixation.

Le profilé partiel principal 24A forme un seul canal central 40 ayant une section circulaire d'axe X-X, et les profilés partiels secondaires 24B forment chacun un seul canal latéral 42, dont chacun s'étend suivant un axe Y-Y, parallèle à l'axe X-X. Le canal central 40 débouche sur la surface frontale 32.

Une douille de support principal 44 est insérée dans le canal central 40 et est fixée dans celui-ci. Cette douille 44 supporte les deux bras principaux 8, 10. Plus précisément, chacune des douilles 44, 46 porte des roulements par lesquelles les bras 8 à 14 sont articulés au poteau 6.

Une douille de support secondaire 46 est insérée dans chacun des canaux latéraux 42 et fixés dans celui-ci, et chacune de ces douilles 46 supporte l'un des bras secondaires 12, 14. De plus, chaque douille secondaire 46 fait saillie du canal latéral 42 correspondant dans le sens dirigé vers l'extrémité libre 22.

Ainsi, le canal central 40 forme un logement principal pour la douille 44, et chaque canal latéral 42 forme un logement secondaire pour l'une des douilles 46.

Dans chacun des canaux 40, 42 s'étend une ligne d'alimentation 50, qui comprend soit un câble électrique, soit une conduite d'alimentation en fluide, soit une ligne d'alimentation en fluide et en électricité combiné. Chaque ligne 50 s'étend sur toute la longueur L1 ou L2 dans le canal 40, 42 associé. Ainsi, la nécessité de pièces séparées pour dissimuler les lignes 50 est supprimée.

Il est à noter que le profilé extrudé 24 est, de préférence, un profilé en un alliage à base d'aluminium, ce qui conduit à un faible poids du support.

La ligne 50 s'étend entre la douille secondaire 46 et le bras secondaire 12 ou 14 autour d'un seul coude de 90°.

Le poteau central 6 est fabriqué de la manière suivante.

Tout d'abord, on fournit une ébauche de profilé extrudé dont la longueur est supérieure ou égale à la longueur L1 du profilé partiel 24A, mais dont la section transversale est identique à la section transversale du profilé extrudé 24.

Ensuite, l'ébauche de profilé extrudé est, le cas échéant, coupée d'un côté perpendiculairement à la direction d'extrusion D, ainsi formant l'extrémité de fixation 22 du profilé 24, et l'ébauche de profilé est coupée de l'autre côté également perpendiculairement à la direction d'extrusion D, et à une distance de l'extrémité 26 qui est identique à la longueur L1 du profilé partiel 24A.

Ensuite, la portion d'extrémité 34 est usinée par enlèvement de copeaux, par exemple par tournage.

L'assemblage du support est effectué de la manière suivante.

Tout d'abord, la bride de fixation 4 est vissée sur l'extrémité de fixation 22 du poteau 6.

Ensuite, les douilles de support 44 et 46 sont fixées par des vis dans les canaux 40 et 42.

Enfin, les bras principaux 8, 10 sont fixés par des roulements sur le manchon 44, et les bras secondaires 12, 14 sont fixés sur les douilles de support 46, également par des roulements.

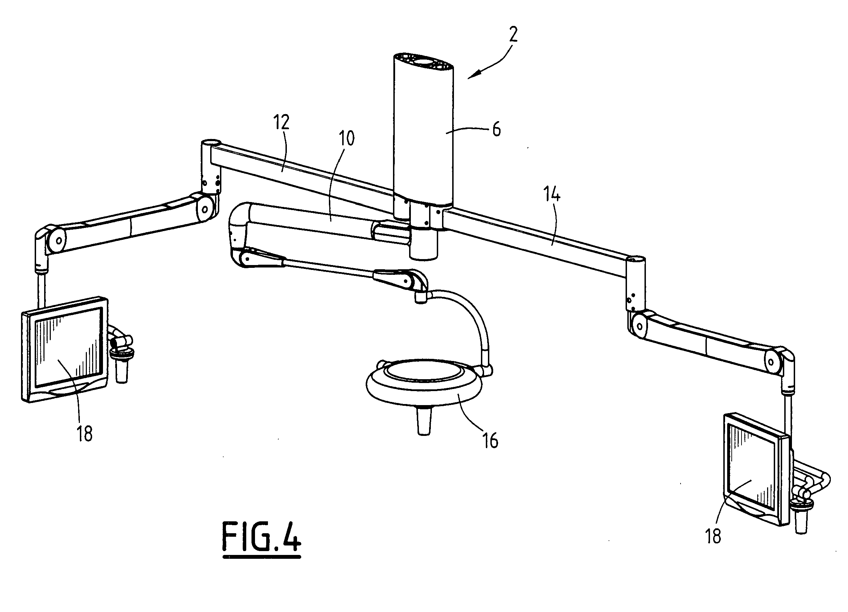

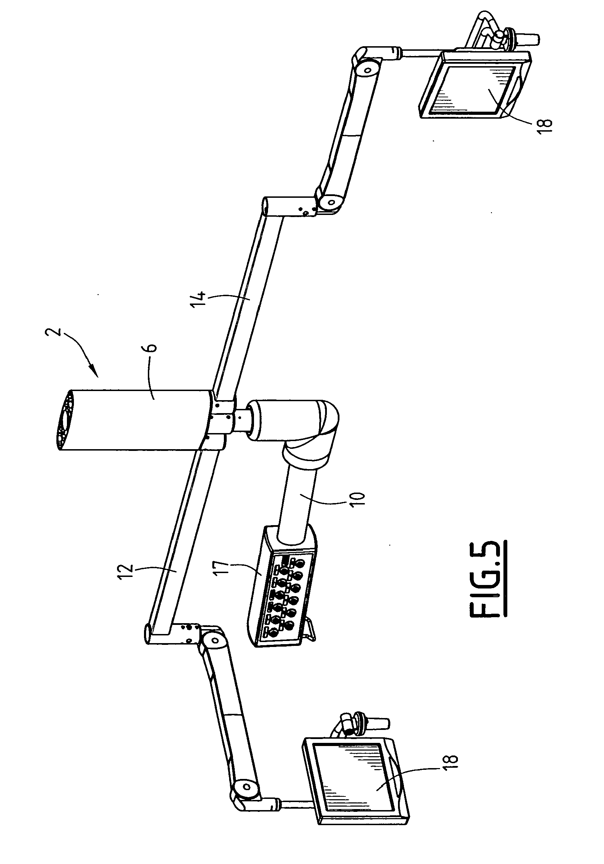

Sur les Figures 4 et 5 sont représentées des variantes du support 2.

Dans ce qui suit, uniquement les différences par rapport au support 2 précédemment décrit seront exposées. Les éléments identiques ou analogues portent les mêmes références.

Le support 2 de la Figure 4 ne porte qu'un seul bras principal 10, le bras principal 8 ayant été omis. En conséquence, la douille de support 44 est axialement raccourcie en comparaison avec la douille 44 du support 2 de la Figure 3.

Le support 2 de la Figure 5 comporte un seul bras principal 10 auquel est fixé un bloc de distribution de fluide et d'électricité 17.

En variante, non représentée, l'extrémité libre 22 du profilé 24 comprend une section transversale dont le contour extérieur est délimité exclusivement par des génératrices G du profilé extrudé 24. Dans ce cas, les extrémités distales 26A, 26B sont alignées axialement. L'extrémité 22 du profilé 24 est obtenue exclusivement par coupe du profilé transversalement à la direction d'extrusion D. Cette variante augmente le débattement angulaire possible des bras secondaires.

Dans ce cas, le poteau 6 peut comprendre un manchon de fixation central, qui est une pièce distincte du profilé extrudé 24, et qui est fixé à l'extrémité distale de celui-ci. Ainsi, l'extrémité libre du poteau et formée par le manchon de fixation central.

En variante, le poteau est fabriqué par soudage de trois pièces tubulaires, dont chacun comporte un seul canal.

L'utilisation d'un profilé extrudé pour former une partie du poteau central 6 permet de réduire le nombre de pièces individuelles à assembler, de telle sorte que le support 2 est économique à fabriquer.

En outre, le profilé extrudé 24 comporte une section transversale importante et a donc une rigidité importante pour un poids donné.

Le poteau selon l'invention permet la fixation de bras supplémentaires lorsqu'il est installé dans un hôpital.

## Revendications

1. Poteau central (6) de support d'un bras principal, notamment pour un éclairage, du type
- s'étendant suivant un axe central (X-X),
- comprenant une extrémité de fixation (20) et une extrémité libre (22) située à l'opposé de l'extrémité de fixation (20), et
- étant muni d'un élément tubulaire principal (24A) formant un logement principal adapté pour maintenir un élément de fixation principal (44) d'un bras principal, **caractérisé en ce qu'**il est muni d'un élément tubulaire secondaire (24B) formant un logement secondaire adapté pour maintenir un élément de fixation secondaire (46) d'un bras secondaire, et **en ce que** ces éléments tubulaires (24A, 24B) définissent chacun une extrémité proximale (26A, 26B) tournée vers l'extrémité de fixation (20) du poteau (6) et une extrémité distale (28A, 28B) tournée à l'opposé de l'extrémité de fixation (20).

2. Poteau selon la revendication 1, **caractérisé en ce que** les éléments tubulaires principal (24A) et secondaire (24B) ont des longueurs axiales différentes.

3. Poteau selon la revendication 2, **caractérisé en ce que** la longueur axiale (L1) de l'élément tubulaire principal (24A) est supérieure à la longueur axiale (L2) de l'élément tubulaire secondaire (24B).

4. Poteau selon la revendication 3, **caractérisé en ce que** les extrémités proximales (26A, 26B) des éléments tubulaires sont axialement alignées, et **en ce que** l'extrémité de fixation (22) du poteau central (6) est formée par les éléments tubulaires principal (24A) et secondaire (24B).

5. Poteau selon l'une quelconque des revendications 1 à 3, **caractérisé en ce que** les extrémités distales de l'élément tubulaire principal et de l'élément tubulaire secondaire sont axialement alignées.

6. Poteau selon l'une quelconque des revendications 1 à 4, **caractérisé en ce que** les extrémités distales de l'élément tubulaire principal (24A) et de l'élément tubulaire secondaire (24B) sont axialement décalées.

7. Poteau selon l'une quelconque des revendications 1 à 6, **caractérisé en ce que** les éléments tubulaires (24A, 24B) sont reliés par liaison de matière, notamment par soudage.

8. Poteau selon l'une quelconque des revendications 1 à 7, **caractérisé en ce que** les éléments tubulaires (24A, 24B) sont formés par un profilé extrudé (24) s'étendant suivant une direction d'extrusion (D).

9. Poteau selon les revendications 4 et 8 prises ensemble, **caractérisé en ce que** l'extrémité de fixation (20) comprend une section transversale dont le contour extérieur est délimité, de préférence délimité exclusivement, par des génératrices (G) du profilé extrudé (24).

10. Poteau selon la revendication 8 ou 9 et la revendication 5 prises ensemble, **caractérisé en ce que** l'extrémité libre (22) du poteau central (6) comprend une section transversale dont le contour extérieur est délimité exclusivement par des génératrices (G) du profilé extrudé (24).

11. Poteau selon l'une quelconque des revendications 8 à 10, **caractérisé en ce que** le profilé extrudé (24) comprend un profilé partiel principal (24A) et un profilé partiel secondaire (24B).

12. Poteau selon la revendication 6 prise ensemble avec l'une des revendications 8 à 10, **caractérisé en ce que** le profilé extrudé (24) comprend une portion d'extrémité (34) qui est adjacente à l'extrémité libre (22), et qui comporte une section transversale dont le contour extérieur est situé exclusivement à l'intérieur des génératrices (G) du contour extérieur du profilé extrudé (24).

13. Poteau selon l'une quelconque des revendications 8 à 12, **caractérisé en ce que** le profilé extrudé (24) est un profilé en un alliage à base d'aluminium.

14. Support selon l'une quelconque des revendications précédentes, **caractérisé en ce que** l'élément de fixation secondaire est une douille de support (46) qui fait saillie du logement secondaire dans un sens dirigé vers l'extrémité libre (22).

15. Support de distribution, notamment pour éclairage, du type comprenant un poteau central (6) et au moins un bras principal de support (8, 10), **caractérisé en ce que** le poteau central (6) est un poteau central selon l'une quelconque des revendications précédentes.

16. Support selon la revendication 15, **caractérisé en ce qu'**un manchon de fixation, qui est une pièce distincte des éléments tubulaires (24A, 24B) est inséré dans le logement principal.

17. Support selon l'une quelconque des revendications 15 ou 16, **caractérisé en ce que** le poteau central (6) comprend un canal central (40) de fixation d'un bras principal (8, 10) et au moins un canal latéral (42) de fixation d'un bras secondaire (12, 14), et **en ce que**, dans chacun de ces canaux (40, 42), est insérée une douille de support (44, 46) adaptée pour supporter un bras.

18. Procédé de fabrication d'un poteau selon l'une quelconque des revendications 1 à 14, **caractérisé par** les étapes successives suivantes :
- fournir une ébauche de profilé extrudé, et
- couper l'ébauche de profilé extrudé à une longueur correspondant à la longueur du profilé extrudé.
